# EUROPEAN PATENT SPECIFICATION

(11) **EP 1 975 678 B1**
(45) Date of publication and mention of the grant of the patent: **16.05.2012**
(21) Application number: 08102540.5
(22) Date of filing: 12.03.2008
(51) Int. Cl.: G02B 27/26, H04N 13/00, G02B 5/30

(54) **Method for manufacturing stereoscopic displaying apparatus**
Verfahren zur Herstellung eines stereoskopischen Anzeigegeräts
Procédé de fabrication d'un appareil à affichage stéréoscopique

(30) Priority: 30.03.2007 US 693726
(43) Date of publication of application: 01.10.2008
(73) Proprietor: ARISAWA MFG. CO., LTD., Joetsu-shi, Niigata 943-8610 (JP)
(72) Inventor: Kuroda, Mikio, Niigata 943-8610 (JP); Sato, Tatsuya, Niigata 943-8610 (JP)
(74) Representative: Tetzner, Michael

(56) References cited:
- US-A1- 2005 168 815
- US-A1- 2006 146 202
- US-A1- 2007 013 624

## Description

The present invention relates to a method for manufacturing a stereoscopic displaying apparatus. Particularly, the present invention relates to a method for manufacturing a stereoscopic displaying apparatus that displays a stereoscopic image by projecting a right eye image and a left eye image onto a viewer.

A stereoscopic displaying apparatus has been known, which has an image displaying section that displays a right eye image and a left eye image on regions different from each other and a phase shift plate arranged facing the two different regions and having two different regions on which the polarization axes of incident lights are orthogonalized to each other and projects a parallactic image onto a viewer as for example, in Japanese Patent Application Publication No.2006-284873.

Viewing with an angle of field from a position at the center of the vertical direction of the stereoscopic displaying apparatus, cross talk may occur such that a part of the right eye image generated by a liquid-crystal display panel is transmitted to the left eye of the viewer through a quarter wave retarder for the left eye.

US 2006/0146202 A1 discloses an image display system in which a liquid crystal display panel has a polarizing plate on the back surface thereof. The front surface of a phase shift plate (micro-patterned retarder) is bonded via an adhesive agent to the back surface of the liquid crystal display panel, the adhesive agent being provided between both surfaces.

US 2005/0168815 discloses a stereoscopic image displaying apparatus, and US 2007/0013624 discloses a display which may be operated in a stereoscopic mode.

The present invention provides a method for manufacturing a stereoscopic displaying apparatus according to claim 1.

In the method for manufacturing a stereoscopic displaying apparatus, the periphery of the image displaying section and the side surface of the phase shift plate can be adhered with adhesive at a plurality of adhering positions separated from each other. Moreover, in the method for manufacturing a stereoscopic displaying apparatus, the surface of the image displaying section from which the right and left eye image lights are emitted and the surface of the phase shift plate on which the light blocking section is provided can be adhered in contact with each other.

In the drawings:

Fig.1 is an exploded perspective view showing a stereoscopic displaying apparatus 100 manufactured by a method according to an embodiment;

Fig.2 is a schematic diagram showing a usage state of the stereoscopic displaying apparatus 100;

Fig.3 is a schematic cross-sectional view showing a phase shift plate 180 at a time when the first step of the method for manufacturing the stereoscopic displaying apparatus 100 is completed;

Fig.4 is a schematic cross-sectional view showing a phase shift plate 180 at a time when the second step of the method for manufacturing the stereoscopic displaying apparatus 100 is completed;

Fig.5 is a schematic cross-sectional view showing a housing 110, a light source 120, an image displaying section 130 and the phase shift plate 180 at a time when the third step of the method for manufacturing the stereoscopic displaying apparatus 100 is completed;

Fig.6 is a schematic plan view showing the stereoscopic displaying apparatus 100 manufactured after the third step of the method for manufacturing the stereoscopic displaying apparatus 100 is completed;

Fig.7 is a schematic cross-sectional view showing the image displaying section 130 and the phase shift plate 180 at a time when the third step of the method for manufacturing the stereoscopic displaying apparatus 100 is completed;

Fig.8 is a schematic cross-sectional view showing the housing 110, the light source 120, the image displaying section 130 and the phase shift plate 180 at a time when the fourth step of the method for manufacturing the stereoscopic displaying apparatus 100 is completed;

Fig.9 is an exploded perspective view showing another stereoscopic displaying apparatus 101 manufactured by the method according to an embodiment.

Hereinafter, the present invention will now be described through preferred embodiments.

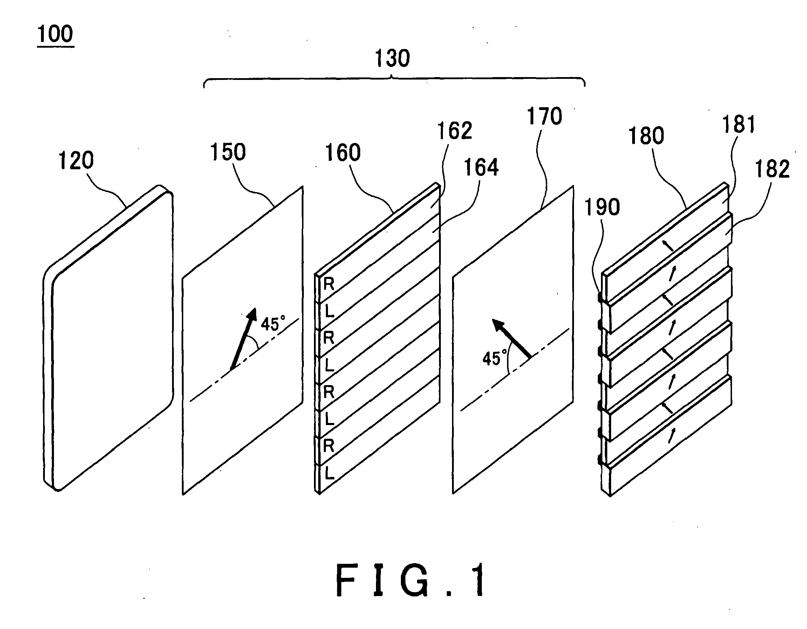

Fig.1 is an exploded perspective view showing a stereoscopic displaying apparatus 100 manufactured by a method according to the present embodiment. As shown in Fig.1, the stereoscopic displaying apparatus 100 includes a light source 120, an image displaying section 130 and a phase shift plate 180 in the described order, and those are accommodated in a housing. The image displaying section 130 includes a polarizing plate 150, an image generating section 160 and a polarizing plate 170. A viewer views a stereoscopic image displayed on the stereoscopic displaying apparatus 100 from the right side of the phase shift plate 180 shown in Fig.1.

The light source 120 is arranged on the innermost of the stereoscopic displaying apparatus 100 from the viewpoint of the viewer and emits a white non-polarized light to one surface of the polarizing plate 150 in using the stereoscopic displaying apparatus 100. Here, the light source 120 is a surface illuminant in the present embodiment, however, the light source 120 may be a combination of such as a point light source and a condenser lens instead of the surface illuminant. An example of condenser lens is a Fresnel lens.

The polarizing plate 150 is provided on the image generating section 160 on the light source 120 side. The polarizing plate 150 has a transmission axis and a absorption axis orthogonalizied to the transmission axis, and when non-polarized light emitted from the light source 120 is incident thereon, transmits light having the polarization axis in parallel with the transmission axis direction among the non-polarized light but blocks light having the polarization axis in parallel with the absorption axis direction. Here, the polarization axis direction is a direction to which light oscillates in the electric field. The transmission axis direction of the polarizing plate 150 is the direction toward the upper right having the angle of 45 degree with the horizontal direction when the viewer views the stereoscopic displaying apparatus 100 shown as an arrow in Fig.1.

The image generating section 160 has right eye image generating regions 162 and left eye image generating regions 164. Each of the right eye image generating regions 162 and the left eye image generating regions 164 are obtained by dividing the image generating section 160 by the horizontal direction, and a plurality of right eye image generating regions 162 and left eye image generating regions 162 are alternately arranged in the vertical direction as shown in Fig.1. In addition, an exterior frame is provided on the periphery of the image generating section 160 (not shown in the figure), and the right eye image generating regions 162 and the left eye image generating regions 164 are supported by the exterior frame in the image generating section 160.

In using the stereoscopic displaying apparatus 100, a right eye image is generated in each right eye image generating region 162 and a left eye image is generated in each left eye image generating region 164 in the image generating section 160, respectively. At this time, light transmitted through the polarizing plate 150 is incident on the right eye image generating region 162 and the left eye image generating region 164 in the image generating section 160, and then, the light transmitted through the right eye image generating region 162 becomes an image light of the right eye image (hereinafter referred to as a right eye image light) and the light transmitted through the left eye image generating region 164 becomes an image light of the left eye image (hereinafter referred to as a left eye image light).

Here, each of the right eye image light transmitted through the right eye image generating region 162 and the left eye image light transmitted through the left eye image generating region 164 are linear polarized light having the polarization axis in a specified direction. Here, each of the polarization axis in the specified direction may be in the same direction each other. For example, each polarization axis is in the same direction as that of the transmission axis of the polarizing plate 170 described later. In such image generating section 160, a plurality of small cells are arranged in a matrix in a plane in the horizontal direction and the vertical direction, for example, and a LCD (liquid crystal display) in which liquid crystal is sealed in each cell sandwiched between the oriented films is used. Each cell is electrically driven in the LCD, so that each cell switches between a state that the light is transmitted therethrough without changing the direction of the polarization axis and a state that the light is transmitted therethrough with rotating the direction of the polarization axis by 90 degree.

The polarizing plate 170 is provided in the image generating section 160 on the viewer side. When the right eye image light transmitted through the right eye image generating region 162 and the left eye image light transmitted through the left eye image generating region 164 are incident thereon, the polarizing plate 170 transmits the light of which polarization axis is in parallel with the transmission axis but blocks the light of which polarization axis is in parallel with the absorption axis among the incident lights. Here, the direction of the transmission axis of the polarizing plate 170 is 45 degree upper left direction from the horizontal direction when the viewer views the stereoscopic image display section 100 shown as the arrow in Fig.1.

The phase shift plate 180 includes first polarizing regions 181 and second polarizing regions 182. The size and the position for each of the first polarizing regions 181 and each of the second polarizing regions 182 in the phase shift plate 180 are corresponding to those of the right eye image generating region 162 and the left eye image generating region 164 in the image generating section 160 as shown in Fig.1. Therefore, in using the stereoscopic displaying apparatus 100, the right eye image light transmitted through the right eye image generating region 162 is incident on the first polarizing region 181 and the left eye image light transmitted through the left eye image generating region 164 is incident on the second polarizing region 182. In addition, a light blocking section 190 is provided on each boundary between the first polarizing regions 181 and the second polarizing regions 182 on the surface facing the image displaying section 130 of the phase shift plate 180. The light blocking section 190 absorbs and blocks the image light over the boundary and incident on the first polarizing region 181 among the left eye image light to be incident on the second polarizing region 182 adjacent to the first polarizing region 181 in the phase shift plate 180. In the same way, the light blocking section 190 absorbs and blocks the image light over the boundary and incident on the second polarizing region 182 among the right eye image light to be incident on the first polarizing region 181 adjacent to the second polarizing region 182 in the phase shift plate 180. Thus, the light blocking section 190 is provided on each boundary on the phase shift plate 180, so that cross talk is less likely to occur in the right eye image light and the left eye image light emitted from the stereoscopic displaying apparatus 100.

The first polarizing region 181 does not rotate the polarization axis of the incident right eye image light but directly transmits therethrough. Meanwhile, the second polarizing region 182 rotates the polarization axis of the incident left eye image light to the direction orthogonalized to the polarization axis of the right eye image light incident on the first polarizing region 181. Therefore, the direction of the polarization axis of the right eye image light transmitted through the first polarizing region 181 and that of the polarization axis of the left eye image light transmitted through the second polarizing region 182 are orthogonalized to each other shown as the arrows in Fig.1. Here, the arrows of the phase shift plate 180 shown in Fig.1 indicate the polarization axes of the polarized light transmitted through the phase shift plate 180. A transparent glass or resin is used for each first polarizing region 181, and a half wave retarder having an optical axis having the angle of 45 degree with the direction of the polarization axis of the incident left eye image light is used for each second polarizing region 182, for example. The direction of the optical axis of the second polarizing region 182 is the horizontal direction or the vertical direction in the embodiment shown in Fig.1. Here, the optical axis means either the phase advance axis or the phase delay axis when light is transmitted through the second polarizing region 182.

In addition, the stereoscopic displaying apparatus 100 may have a diffuser panel that diffuses the right eye image light and the left eye image light transmitted through the first polarizing region 181 and the second polarizing region 182 in at least one direction of the horizontal direction or the vertical direction on the viewer side, i.e. the right side of the phase shift plate 180 in Fig.1. For such diffuser panel, a lenticular lens sheet on which plurality of convex lenses (cylindrical lenses) are extended in the horizontal direction or the vertical direction, or a lens array sheet on which a plurality of convex lenses are arranged on a plane is used, for example.

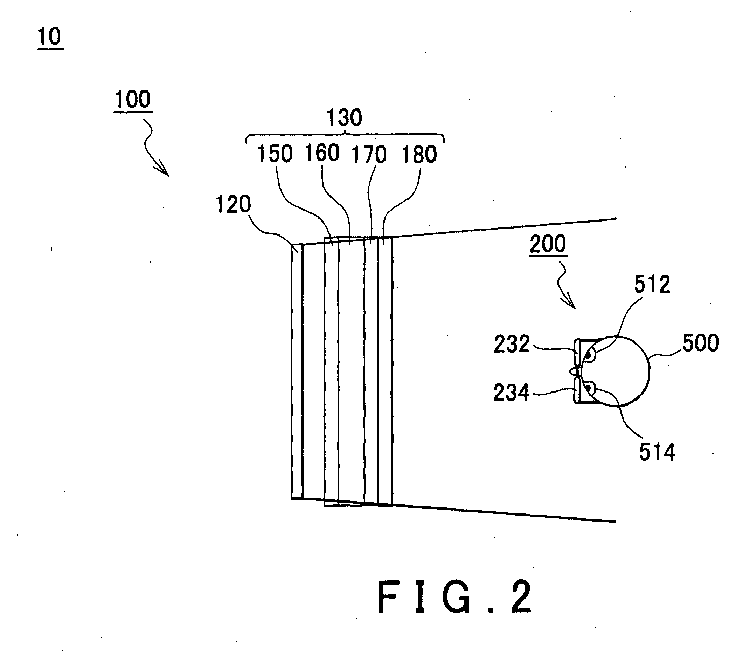

Fig.2 is a schematic diagram showing a usage state of the stereoscopic displaying apparatus 100. Viewing a stereoscopic image through the stereoscopic displaying apparatus 100, the viewer 500 views the right eye image light and the left eye image light projected from the stereoscopic displaying apparatus 100 with a polarized glasses 200 as shown in Fig.2. When the viewer 500 wears the polarized glasses 200, a right eye image transmitting section 232 is disposed at the position for a right eye 512 side and a left eye image transmitting section 234 is disposed at the position for a left eye 514 side of the viewer 500. Each of the right eye image transmitting section 232 and the left eye image transmitting section 234 is a polarizing lens having a specified transmission axis direction different from each other and fixed to a frame of the polarized glasses 200.

The right eye image transmitting section 232 is a polarizing plate of which transmission axis direction is the same as that of the right eye image light transmitted through the first polarizing region 181 and of which absorption axis direction is orthogonalized to the transmission axis direction. Meanwhile, the left eye image transmitting section 234 is a polarizing plate of which transmission axis direction is the same as that of the left eye image light transmitted through the second polarizing region 182 and of which absorption axis direction is orthogonalized to the transmission axis direction. For each of the right eye image transmitting section 232 and the left eye image transmitting section 234, a polarizing lens to which a polarizing film obtained by uniaxially drawing a film impregnating dichromatic dye is attached is used, for example.

Viewing a stereoscopic image through the stereoscopic displaying apparatus 100, the viewer 500 views the stereoscopic displaying apparatus 100 with the polarized glasses 200 as described above within a range in which the right eye image light and the left eye image light transmitted through the first polarizing region 181 and the second polarizing region 182, respectively in the phase shift plate 180 are emitted, so that the right eye 512 can view only the right eye image light and the left eye 514 can view only the left eye image light. Therefore, the viewer 500 can perceive the right eye image light and left eye image light as a stereoscopic image.

Hereinafter, a method for manufacturing the stereoscopic displaying apparatus 100 will be described. In the method for manufacturing the stereoscopic displaying apparatus 100 according to the present embodiment, the following steps are performed in the described order: a first step of arranging the first polarizing region 181 and the second polarizing region 182 adjacent to each other on the phase shift plate 180; a second step of providing a light blocking section 190 that blocks the incident right eye image light and the left eye image light on the boundary between the first polarizing region 181 and the second polarizing region 182 on the one surface of the phase shift plate 180; and a third step of attaching to the image displaying section 130 the phase shift plate 180 such that one surface of phase shift plate 180 on which the light blocking section 190 is provided faces the image displaying section 130.

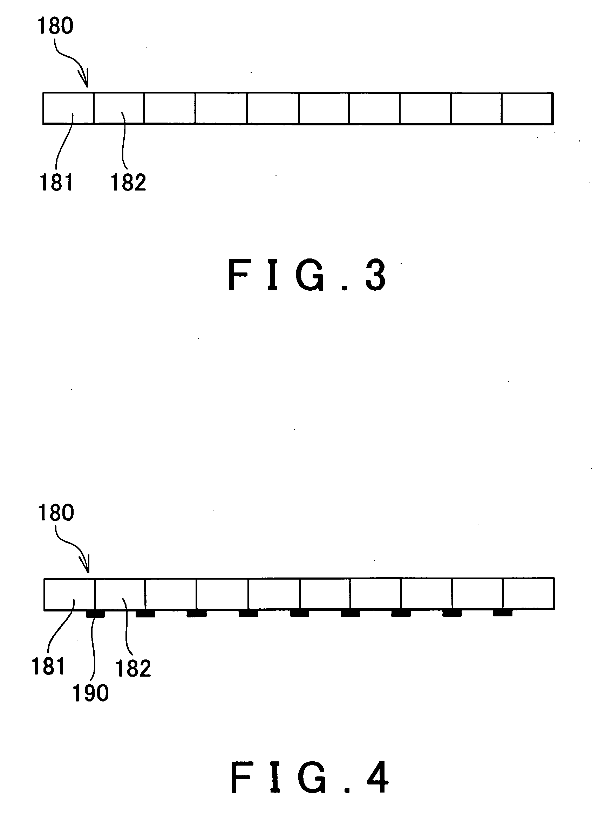

Fig.3 is a schematic cross-sectional view showing a phase shift plate 180 at a time when the first step of the method for manufacturing the stereoscopic displaying apparatus 100 is completed. In the present step, the first polarizing regions 181 and the second polarizing regions 182 are alternately formed on the phase shift plate 180 which is formed of photopolymer, or which includes a transparent substrate with which the photopolymer is coated. Thereby the phase shift plate 180 is manufactured on which the first polarizing regions 181 and the second polarizing regions 182 are alternately arranged in adjacent to each other as shown in Fig.3. Here, for the method for forming the first polarizing regions 181 and the second polarizing regions 182, well-known methods are appropriately selected.

Fig.4 is a schematic cross-sectional view showing a phase shift plate 180 at a time when the second step of the method for manufacturing the stereoscopic displaying apparatus 100 is completed. In the present step, a strip light blocking section 190 is formed on the boundary between each first polarizing region 181 and each second polarizing region 182 on one surface of the phase shift plate 180 by screen printing as shown in Fig.4. Here, it is preferred that the light blocking section 190 is formed of material obtained by dispersing filer components in a binder resin. The filer components may be metal particles and the oxide thereof, or pigment and dye. It is preferred that the color tone of the filer components is black for the right eye image light and the left eye image light emitted from the image displaying section 130. The binder resin in which the pigment and the dye are dispersed or dissolved may be a well-known resin such as acrylic resin, urethane resin, polyester, novolac resin, polyimide, epoxide resin, chloroethylene/vinyl acetate copolymer, nitrocellulose or these combination.

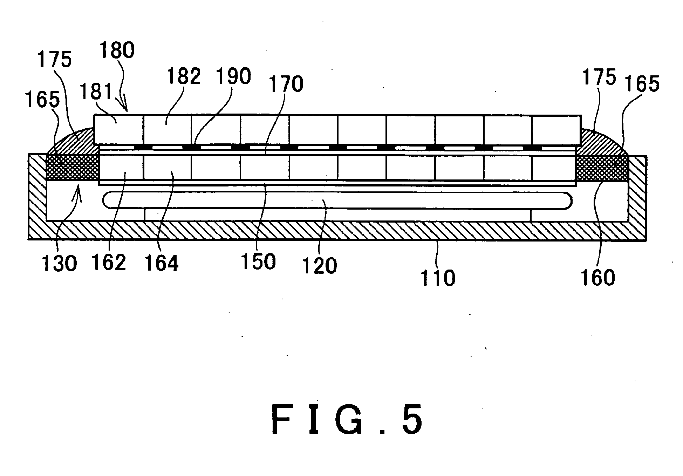

Fig.5 is a schematic cross-sectional view showing the image displaying section 130 and the phase shift plate 180 at a time when the third step of the method for manufacturing the stereoscopic displaying apparatus 100 is completed. In the present step, firstly the phase shift plate 180 and the image displaying section 130 are arranged such that the surface of the phase shift plate 180 on which the light blocking sections 190 are provided faces the image displaying section 130. Here, the image displaying section 130 is attached to the housing 110 of which one surface is opened while the polarizing plate 150 and the polarizing plate 170 are previously attached to both surfaces of the image generating section 160 having the periphery on which the exterior frame 165 is provided, respectively as shown in Fig.5. Here, the surface to which the polarizing plate 170 is attached is exposed to the outside from the opened surface. The housing 110 is made of such as plastic or stainless, and the light source 120 is fixed to the inside of the surface facing the opened surface. Moreover, an example of the image displaying section 130 is a LCD that displays a two-dimensional image without attaching the phase shift plate 180 in the present step.

The phase shift plate 180 and the image displaying section 130 are arranged as described above in the present step, so that one surface of the image displaying section 130 to which the polarizing plate 170 is attached faces the surface of the phase shift plate 180 on which the light blocking sections 190 are provided. Next, after positioning the image displaying section 130 and the phase shift plate 180 with respect to the mutual facing direction such that each of the first polarizing regions 181 and each of the second polarizing regions 182 of the phase shift plate 180 face each of the right eye image generating regions 162 and each of the left eye image generating regions 164 of the image display section 130, respectively, the surface of the image display section 130 and that of the phase shift plate 180 which face each other are abutted.
Finally, the exterior frame 165 on the periphery of the image displaying section 130 and the side surface of the phase shift plate 180 are adhered with adhesive 175 as shown in Fig.5. Thereby cross talk is less likely to occur in using the stereoscopic displaying apparatus 100. Here, after completing the present step, such as a diffuser panel or an anti-reflection film may be attached to the surface of the phase shift plate 180 which is exposed to the outside.

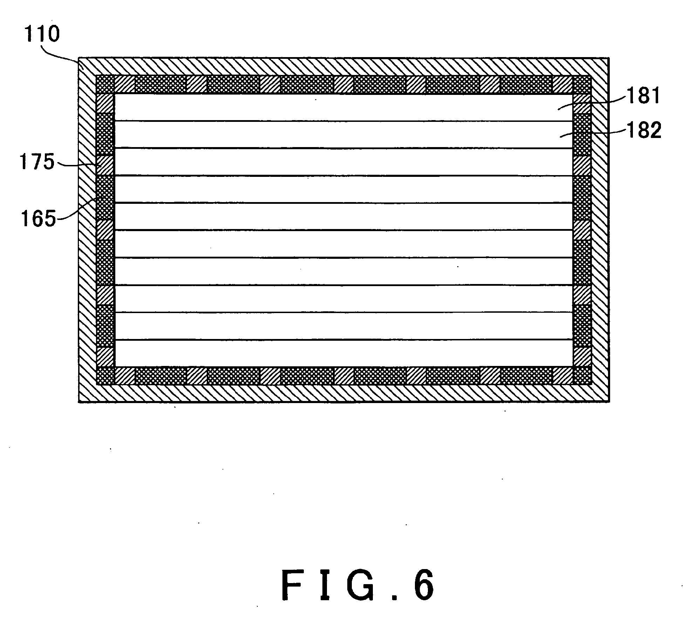

Fig.6 is a schematic plan view showing the stereoscopic displaying apparatus 100 manufactured after the third step of the method for manufacturing the stereoscopic displaying apparatus 100 is completed. In the stereoscopic image displaying section 100, the exterior frame 165 of the image displaying section 130 is adhered to the side surface of the phase shift plate 180 at a plurality of adhering positions separated from each other with adhesive 175 as shown in Fig.6 in the third step. Thereby heat generated from the image displaying section 130 can be effectively escaped in comparison with the case that all over the side surface of the phase shift plate 180 is coated with the adhesive 175 and attached to the exterior frame 165 of the image displaying section 130.

Here, the above described method for manufacturing the stereoscopic displaying apparatus 100 is not limited to the method including the above described steps 1-3. Hereinafter, another method for manufacturing the stereoscopic displaying apparatus 100 will be described. In the present method, the step 1 and the step 2 the same as those of the above described method; a third' step of attaching to the image displaying section 130 the phase shift plate 180 such that one surface of the phase shift plate 180 on which the light blocking sections 190 are provided faces the image displaying section 130; and a fourth' step of assembling the image displaying section 130 to which the phase shift plate 180 is attached and the housing 110 are performed in the described order.

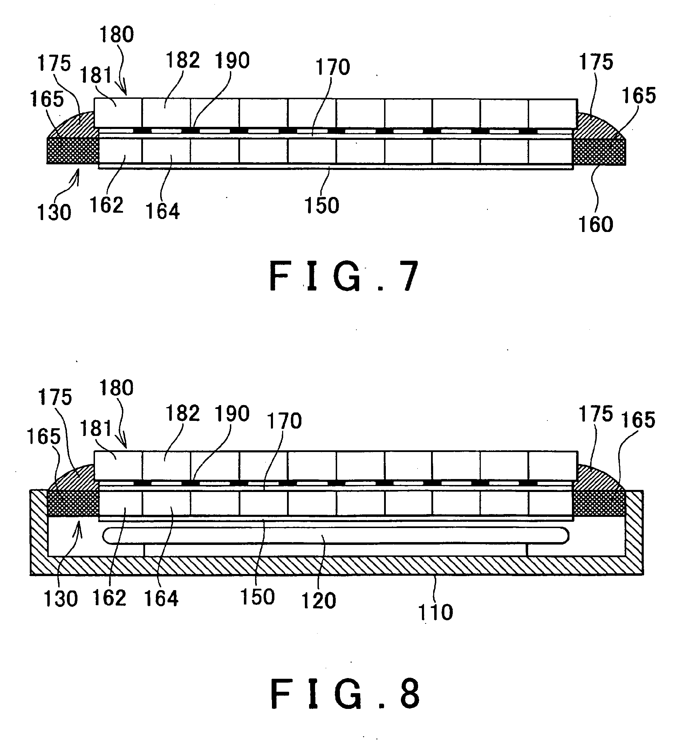

Fig.7 is a schematic cross-sectional view showing the image displaying section 130 and the phase shift plate 180 at a time when the third' step of the method for manufacturing the stereoscopic displaying apparatus 100 is completed. In the present step, firstly the phase shift plate 180 and the image displaying section 130 are arranged such that the surface of the phase shift plate 180 on which the light blocking sections 190 are provided faces the image displaying section 130. Here, one surface of the image displaying section 130 to which the polarizing plate 170 is attached faces the surface of the phase shift plate 180 on which the light blocking section 190 are provided while the polarizing plate 150 and the polarizing plate 170 are attached to both surfaces of the image generating section 160 having the periphery on which the exterior frame 165 is provided, respectively, as shown in Fig.7. Next, after positioning the image displaying section 130 and the phase shift plate 180 with respect to the mutual facing direction such that each of the first polarizing regions 181 and each of the second polarizing regions 182 of the phase shift plate 180 face each of the right eye image generating regions 162 and each of the left eye image generating regions 164 of the image display section 130, respectively, the surface of the image display section 130 and that of the phase shift plate 180 which face each other are abutted. Finally, the exterior frame 165 on the periphery of the image displaying section 130 and the side surface of the phase shift plate 180 are adhered with adhesive 175 as shown in Fig.7. Thereby cross talk is less likely to occur in using the stereoscopic displaying apparatus 100.

Fig.8 is a schematic cross-sectional view showing the housing 110, the light source 120, the image displaying section 130 and the phase shift plate 180 at a time when the fourth' step of the method for manufacturing the stereoscopic displaying apparatus 100 is completed. In the present step, the image displaying section 130 and the phase shift plate 180 which are positioned and adhered in the step 3' are attached to the housing 110 of which one surface is opened such that the phase shift plate 180 is exposed to the outside from the opened surface as shown in Fig.8. The housing 110 is made of such as plastic or stainless, and the light source 120 is fixed to the inside of the surface facing the opened surface. Moreover, the image displaying section 130 and the phase shift plate 180 are positioned on the housing 110 by screwing the exterior frame 165 of the image displaying section 130 on the side surface of the housing 110 in the present step. Here, after completing the preset step, such as a diffuser panel or an anti-reflection film may be attached to the surface of the phase shift plate 180 which is exposed to the outside.

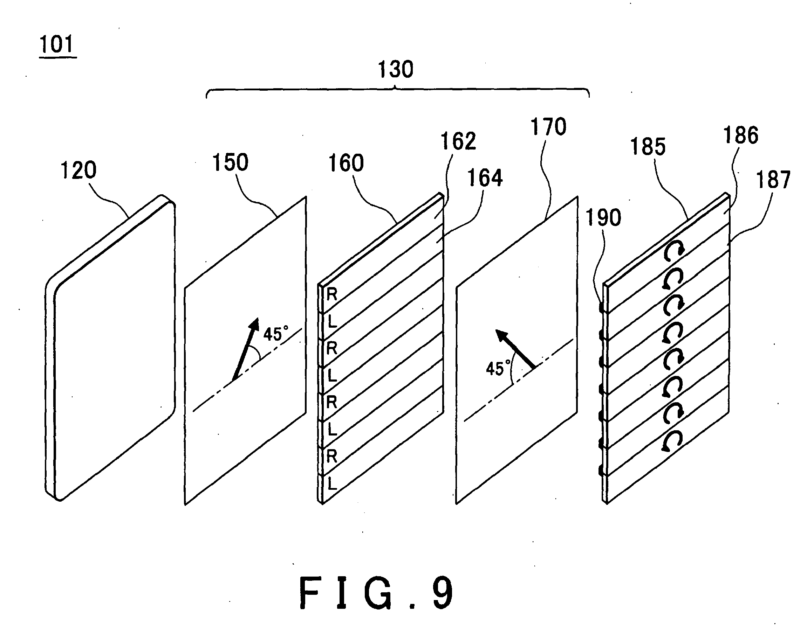

Fig.9 is an exploded perspective view showing another stereoscopic displaying apparatus 101 manufactured by the method according to the present embodiment. The components of the stereoscopic displaying apparatus 101 shown in Fig.9 the same as those of the stereoscopic displaying apparatus 100 have the reference numerals the same as those of the components of the stereoscopic displaying apparatus 100, so that the description is omitted. As shown in Fig.9, the stereoscopic displaying apparatus 101 has a phase shift plate 185 instead of the phase shift plate 180 of the stereoscopic displaying apparatus 100. The phase shift plate 185 includes first polarizing regions 186 and second polarizing regions 187. Here, both of the first polarizing regions 186 and the second polarizing regions 187 are quarter wave retarders. The optical axis of each of them is orthogonalized to each other. The position and the size for each of the first polarizing regions 186 and the second polarizing regions 187 in the phase shift plate 185 are corresponding to those for each of the right eye image generating regions 162 and the left eye image generating regions164 of the image generating section 160 as well as the position and the size for each of the first polarizing regions 181 and the second polarizing regions 182 in the phase shift plate 180. Therefore, in using the stereoscopic displaying apparatus 101, the right eye image light transmitted through the right eye image generating region 162 is incident on the first polarizing region 186 and the left eye image light transmitted through the left eye image generating region 164 is incident on the second polarizing region 187.

In addition, the light blocking section 190 is provided on the boundary between each of the first polarizing regions 186 and each of the second polarizing regions 187 on the surface of the phase shift plate 185, which faces the image displaying section 130. The light blocking section 190 absorbs and blocks the image light over the boundary and incident on the first polarizing region 186 among the left eye image light to be incident on the second polarizing region 187 adjacent to the first polarizing region 186 in the phase shift plate 185. In the same way, the light blocking section 190 absorbs and blocks the image light over the boundary and incident on the second polarizing region 187 among the right eye image light to be incident on the first polarizing region 186 adjacent to the second polarizing region 187 in the phase shift plate 185. Thus, the light blocking section 190 is provided on each boundary on the phase shift plate 185, so that cross talk is less likely to occur in the right eye image light and the left eye image light emitted from the stereoscopic displaying apparatus 101.

The phase shift plate 185 emits the incident lights as circularly polarized lights of which polarization axes are rotated in the directions opposite to each other. For example, each of the first polarizing regions 186 emits the incident light as a clockwise circularly polarized light, and each of the second polarizing regions 187 emits the incident light as an anticlockwise circularly polarized light. Here, each arrow of the phase shift plate 185 shown in Fig.8 indicates the rotating direction of the polarized light transmitted through the phase shift plate 185. For the first polarizing region 186, a quarter wave retarder of which optical axis is in the horizontal direction is used, and for the second polarizing region 187, a quarter wave retarder of which optical axis is in the vertical direction is used, for example.

Viewing the stereoscopic displaying apparatus 101 having the phase shift plate 185 shown in Fig.8, the viewer 500 views with a polarized glasses (not shown in the figure) having the quarter wave retarder and the polarizing lens over the right eye 512 and the quarter wave retarder and the polarizing lens over the left eye 514, respectively. In the polarized glasses, the optical axis of the quarter wave retarder over the right eye 512 of the viewer 500 is in the horizontal direction, and the optical axis of the quarter wave retarder over the left eye 514 of the viewer 500 is in the vertical direction. Meanwhile, the transmission axis direction of each of the polarizing lens over the right eye 512 and the polarizing lens over the left eye 514 of the viewer 500 has the angle of 45 degree to the right from the viewpoint of the viewer 500, and the absorption axis direction is orthogonalized to the transmission direction.

In the case that the viewer 500 views the stereoscopic displaying apparatus 101 with the polarized glasses, when a circularly polarized light of which polarization axis is rotated clockwise from the view point of the viewer 500 is incident thereon, the circularly polarized light is transformed to a linear polarized light having the angle of 45 degree to the right by the quarter wave retarder of which optical axis is in the horizontal direction, transmitted through the polarizing lens and viewed by the right eye 512 of the viewer 500. Meanwhile, when a circularly polarized light of which polarization axis is rotated counterclockwise from the view point of the viewer 500 is incident thereon, the circularly polarized light is transformed to a linear polarized light having the angle of 45 degree to the right by the quarter wave retarder of which optical axis is in the vertical direction, transmitted through the polarizing lens and viewed by the left eye 514 of the viewer 500.
Thus, the stereoscopic displaying apparatus 101 is viewed with the polarized glasses, so that the right eye 512 can view only the right eye image light and the left eye 514 can view only the left eye image light. Therefore, the viewer 500 can perceive the right eye image light and the left eye image light as a stereoscopic image.

Here, the entire size of the phase shift plate 180 may be larger or smaller than that of the image generating section 160 and the polarizing plate 170.

As evidenced by the above description, embodiments of the present invention provide the stereoscopic displaying apparatus 100 obtained by positioning the image displaying section 130 and the phase shift plate 180 with respect to the mutual facing direction and then adhering the periphery of the image displaying section 130 onto the side surface of the phase shift plate 180 with adhesive 175 at a plurality of adhering positions separated from each other, and the method of manufacturing the stereoscopic displaying apparatus 100. According to such stereoscopic displaying apparatus 100, the image displaying section 130 is adjacent to the phase shift plate 180, and the phase shift plate 180 has the light blocking section 190. Therefore, cross talk such that a part of the left eye image light from the left eye image generating region 164 of the image displaying section 130 is transmitted to the viewer through the right eye polarizing region of the phase shift plate 180 can be reduced. Moreover, the heat generated from the image displaying section can be efficiently escaped.

## Claims

1. A method for manufacturing a stereoscopic displaying apparatus (100) comprising:
- providing an image displaying section (130) which has an image generating section (160) including a right eye image generating region (162) on which a right eye image is generated and a left eye image generating region (164) on which a left eye image is generated, such that non-polarized light which is incident on said image displaying section (130) is transmitted as a right eye image light including the right eye image and a left eye image light including the left eye image, said right and left eye image lights being linear polarized lights of which polarization axes are in parallel with each other; and
- providing a phase shift plate (180) having a first polarizing region (181) and a second polarizing region (182), such that, when the right eye image light is incident on the first polarizing region (181) and the left eye image light is incident on the second polarizing region (182), respectively, the incident right and left image lights are transmitted as linearly polarized lights of which polarization axes are orthogonalized to each other or are transmitted as circularly polarized lights of which polarization axes are rotated in the directions opposite to each other,
the method for manufacturing the stereoscopic displaying apparatus (100) further comprising:
arranging the first polarizing region (181) and the second polarizing region (182) adjacent to each other on the phase shift plate (180);
providing a light blocking section (190) which blocks the incident right eye image light and the left eye image light on the boundary between the first polarizing region (181) and the second polarizing region (182) of one surface of the phase shift plate (180);
positioning the image displaying section (130) and the phase shift plate (180) such that the first and second polarizing regions (181, 182) of the phase shift plate (180) face the corresponding right and left eye image generating regions (162, 164) of the image displaying section (130); and
adhering with adhesive (175) the side surface of the phase shift plate (180) and an exterior frame (165) on the periphery of the image displaying section (130), said periphery being outside the region on which the phase shift plate (180) is provided.

2. The method for manufacturing a stereoscopic displaying apparatus (100) as set forth in Claim 1, wherein the periphery of the image displaying section (130) and the side surface of the phase shift plate (180) are adhered with adhesive (175) at a plurality of adhering positions separated from each other.

3. The method for manufacturing a stereoscopic displaying apparatus (100) as set forth in Claim 1, wherein the surface of the image displaying section (130) from which the right and left eye image lights are emitted and the surface of the phase shift plate (180) on which the light blocking section (190) is provided are adhered in contact with each other.

## Patentansprüche

1. Verfahren zur Herstellung eines stereoskopischen Anzeigegeräts (100), umfassend:
Bereitstellen eines Bildanzeigeabschnitts (130), der einen Bilderzeugungsabschnitt (160) aufweist, der einen Bilderzeugungsbereich (162) für das rechte Auge, an dem ein Bild für das rechte Auge erzeugt wird, und einen Bilderzeugungsbereich (164) für das linke Auge enthält, an dem ein Bild für das linke Auge erzeugt wird, so dass unpolarisiertes Licht, das auf den Bildanzeigeabschnitt (130) einfällt, als ein das Bild für das rechte Auge enthaltendes Bildlicht für das rechte Auge und ein das Bild für das linke Auge enthaltendes Bildlicht für das linke Auge übertragen wird, wobei die Bildlichter für das rechte und das linke Auge linear polarisiertes Licht sind, dessen Polarisationsachsen parallel zueinander sind, und
Bereitstellen einer Phasenverschiebungsplatte (180), die einen ersten Polarisierungsbereich (181) und einen zweiten Polarisierungsbereich (182) derart aufweist, dass wenn das Bildlicht für das rechte Auge auf den ersten Polarisierungsbereich (181) einfällt bzw. das Bildlicht für das linke Auge auf den zweiten Polarisierungsbereich (182) einfällt, die einfallenden Bildlichter für das rechte und linke Auge als linear polarisierte Lichter übertragen werden, deren Polarisationsachsen zueinander orthogonalisiert sind, oder als zirkular polarisierte Lichter übertragen werden, deren Polarisationsachsen in zueinander entgegen gesetzten Richtungen gedreht sind,
wobei das Verfahren zur Herstellung eines stereoskopischen Anzeigegeräts (100) ferner umfasst:
Anordnen des ersten Polarisierungsbereichs (181) und des zweiten Polarisierungsbereichs (182) nebeneinander auf der Phasenverschiebungsplatte (180),
Bereitstellen eines Lichtblockierungsabschnitts (190), der das einfallende Bildlicht für das rechte Auge und Bildlicht für das linke Auge an der Grenze zwischen dem ersten Polarisierungsbereich (181) und dem zweiten Polarisierungsbereich (182) einer Oberfläche der Phasenverschiebungsplatte (180) blockiert,
Positionieren des Bildanzeigeabschnitts (130) und der Phasenverschiebungsplatte (180) derart, dass der erste und der zweite Polarisierungsbereich (181, 182) der Phasenverschiebungsplatte (180) zum entsprechenden Bilderzeugungsbereich (162, 164) für das rechte und das linke Bild des Bildanzeigeabschnitts (130) weist, und
Kleben der Seitenfläche der Phasenverschiebungsplatte (180) und eines Außenrahmens (165) am Rand des Bildanzeigeabschnitts (130) mit Klebstoff (175), wobei sich der Rand außerhalb des Bereichs befindet, an dem die Phasenverschiebungsplatte (180) vorgesehen ist.

2. Verfahren zur Herstellung eines stereoskopischen Anzeigegeräts (100) nach Anspruch 1, bei dem der Rand des Bildanzeigeabschnitts (130) und die Seitenfläche der Phasenverschiebungsplatte (180) mit dem Klebstoff (175) an einer Vielzahl von Klebestellen verklebt sind, die voneinander abgesondert sind.

3. Verfahren zur Herstellung eines stereoskopischen Anzeigegeräts (100) nach Anspruch 1, bei dem die Oberfläche des Bildanzeigeabschnitts (130), von dem die Bildlichter des rechten und des linken Auges emittiert werden, und die Oberfläche der Phasenverschiebungsplatte (180), an der der Lichtblockierungsabschnitt (190) vorgesehen ist, in Kontakt miteinander verklebt sind.

## Revendications

1. Procédé de fabrication d'un appareil d'affichage stéréoscopique (100), comprenant :
- la disposition d'une partie d'affichage d'image (130), qui présente une partie de génération d'image (160) avec une région générant une image d'oeil droit (162), sur laquelle une image d'oeil droit est générée, et une région générant une image d'oeil gauche (164), sur laquelle une image d'oeil gauche est générée, de sorte que la lumière non polarisée, qui est incidente sur ladite partie d'affichage d'image (130) est transmise en tant que lumière d'image d'oeil droit comprenant l'image d'oeil droit et lumière d'image d'oeil gauche comprenant l'image d'oeil gauche, lesdites lumières d'oeil droit et d'oeil gauche étant des lumières linéaires polarisées, dont les axes de polarisation sont mutuellement parallèles, et
- la disposition d'une plaque de décalage de phase (180) ayant une première région de polarisation (181) et une deuxième région de polarisation (182), telle que lorsque la lumière d'image d'oeil droit est incidente sur la première région de polarisation (181) et que la lumière d'image d'oeil gauche est incidente sur la deuxième région de polarisation (182), respectivement, les lumières incidentes d'image droite et d'image gauche sont transmises en tant que lumières polarisées linéairement dont les axes de polarisation sont mutuellement orthogonaux ou sont transmises en tant que lumières polarisées circulairement, dont les axes de polarisation tournent en directions opposées les uns par rapport aux autres,
le procédé de fabrication de l'appareil d'affichage stéréoscopique (100) comprenant en outre :
l'agencement de la première région de polarisation (181) et de la deuxième région de polarisation (182) de manière adjacente l'une à l'autre sur la plaque de décalage de phase (180) ;
la disposition d'une partie bloquant la lumière (190), qui bloque la lumière incidente d'image d'oeil droit et la lumière incidente d'image d'oeil gauche sur la limite entre la première région de polarisation (181) et la deuxième région de polarisation (182) d'une surface de la plaque de décalage de phase (180) ;
le positionnement de la partie d'affichage d'image (130) et de la plaque de décalage de phase (180), tel que la première région de polarisation (181) et la deuxième région de polarisation (182) de la plaque de décalage de phase (180) se trouvent en face des régions de génération d'image d'oeil droit et d'oeil gauche (162, 164) correspondantes de la partie d'affichage d'image (130), et
l'adhésion avec un adhésif (175) de la surface latérale de la plaque de décalage de phase (180) et d'un cadre extérieur (165) sur la périphérie de la partie d'affichage d'image (130), ladite périphérie étant à l'extérieur de la région sur laquelle la plaque de décalage de phase (180) est agencée.

2. Procédé de fabrication d'un appareil d'affichage stéréoscopique (100) selon la revendication 1, où la périphérie de la partie d'affichage d'image (130) et la surface latérale de la plaque de décalage de phase (180) adhérent avec un adhésif (175) en une série de positions d'adhésion séparées les unes des autres.

3. Procédé de fabrication d'un appareil d'affichage stéréoscopique (100) selon la revendication 1, où la surface de la partie d'affichage d'image (130), depuis laquelle les lumières d'image d'oeil droit et d'oeil gauche sont émises, et la surface de la plaque de décalage de phase (180), sur laquelle la partie de blocage de lumière (190) se situe, adhèrent en contact l'une avec l'autre.
